# FASCICULE DE BREVET EUROPEEN

(11) **EP 1 701 857 B1**
(45) Date de publication et mention de la délivrance du brevet: **11.11.2009**
(21) Numéro de dépôt: 04816597.1
(22) Date de dépôt: 23.12.2004
(51) Int. Cl.: B60K 15/035

(54) **Agencement de reservoir de carburant dans un vehicule automobile**
Anordnung für einen Kraftstofftank in einem Kraftfahrzeug
Arrangement of a fuel tank in a motor vehicle

(30) Priorité: 02.01.2004 FR 0450002
(43) Date de publication de la demande: 20.09.2006
(73) Titulaire: RENAULT S.A.S., 92100 Boulogne Billancourt (FR)
(72) Inventeur: HLUBINA, Thierry, F-92370 Chaville (FR); VINCENT, Philippe, F-92500 RUEIL MALMAISON (FR)
(86) Numéro de dépôt international: PCT/FR2004/050750
(87) Numéro de publication internationale: WO 2005/073007

(56) Documents cités:
- JP-A- 8 164 757
- US-A- 5 960 833
- US-A1- 2002 112 779

## Description

Le sujet de cette invention est aménagement d'un réservoir de carburant dans un véhicule automobile.

Les réservoirs de carburant sont placés sous le plancher des véhicules. Un tuyau d'alimentation en carburant et un tuyau de dégazage y aboutissent ; le tuyau de dégazage, qui permet d'évacuer l'air du réservoir aux remplissages en carburant, se raccorde à une portion de sommet du réservoir, à peu de distance au-dessous du plancher puisqu'il ne convient pas d'abaisser excessivement le réservoir: le raccordement du tuyau de dégazage sur le réservoir est alors au niveau d'un des longerons du châssis du véhicule qui soutient le plancher. Dans la technique classique, le tuyau de dégazage passe au-dessous de ce longeron, en s'abaissant au-dessous de son niveau de raccordement au réservoir avant de s'élever de rouveru après que le longeron a été contourné : il forme ainsi un siphon susceptible de contrarier le dégazage, qui se traduit pour l'utilisateur par un problème de remplissage.

La demande de brevet japonais JP 08 164757 A décrit un agencement de réservoir de carburant pour véhicule automobile comprenant, outre le réservoir placé entre deux longerons du châssis du véhicule, une gaine de grande largeur permettant le passage d'un tuyau de dégazage et d'un tuyau de remplissage à travers des parolis fixées sur un longeron. Cette gaine n'est pas ajustée aux tuyaux.

L'object de l'invention est de parvenir à une conception meilleure de cet agencement de réservoir et et particulier du tuyau de dégazage afin d'améliorer la communication avec l'air extérieur au moyen d'un tuyau plus court qui permet aussi un montage plus simple et de meilleur aspect. De plus, le tuyau de dégazage est mieux soutenu.

Tel qu'il est' revendiqué, un agencement de réservoir de carburant d'un véhicule automobile, comprend deux longerons d'un châssis du véhicule, un réservoir placé entre les deux longerons, un tuyau d'alimentation du réservoir et un tuyau de dégazage du réservoir, ledit tuyau de dégazage passant à travers un des longerons, comprenant successivement une portion venant du réservoir, une portion horizontale traversant le longeron, et une portion oblique aboutissant à l'air libre.

Selon l'invention, le tuyau de dégazage est entouré par un manchon et manchon est un manchon de guidage soutenant la portion horizontale ; le tuyau d'alimentation passant au dessous dudit longeron.

Le manchon de guidage peut être équipé de deux bagues de mastic gonflant à des portions affleurant à des faces latérales opposées du longeron, afin de retenir le manchon tout en évitant la corrosion aux parties ajustées dans le longeron.

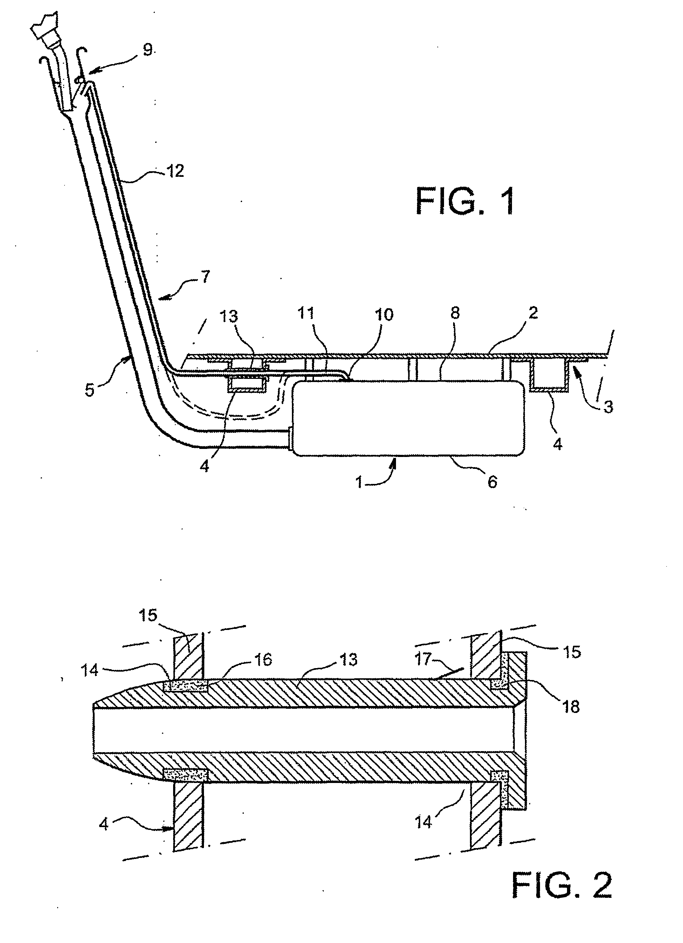

L'invention sera maintenant décrite au moyen de la figure 1 qui représente l'agencement de l'invention de l'avant du véhicule, et de la figure 2 qui en représente un détail.

Un réservoir de carburant 1 d'une automobile qui n'est que partiellement, représentée est suspendu sous un plancher 2 de celle-ci. Le plancher 2 est souvenu par un châssis 3 usuel dont font partie des longerons 4, vus ici en coupe. Se branchent au réservoir 1 un tuyau de remplissage 5 menant à un fond 6 et un tuyau de dégazage 7 menant à in sommet 8 de celui-là. Les tuyaux 5 et 7 aboutissent à une buse d'alimentation en carburent 9 sur le côté du véhicule. Le réservoir 1 se trouvant entre les longerons 4, les tuyaux 5 et 7 doivent passer devant l'un d'eux. Le tuyau de remplissage 5 passe bien au-dessous de ce longeron, mais, de façon originale, le tuyau de dégazage passe au travers dudit longeron 4. Il se compose d'une portion 10 menant au sommet 8 du réservoir 1, d'une portion horizontale 11 d'orientation transversale qui est celle qui passe au travers du longeron 4 et d'une portion oblique 12 menant à l'air libre et à la buse de d'alimentation en carburant 9. On renonce ainsi à la disposition antérieure (en pointillés) qui impliquait la formation d'un siphon. Le tuyau de dégazage 7 pourrait aussi traverser le longeron 4 avec une inclinaison. Le perçage du longeron 4 pour laisser passer le tuyau de dégazage 7 peut être créé à cet effet ou être déjà présent sur les véhicules du même modèle. Il est établi plutôt vers l'avant du longeron 4, qui est plus résistant et peut donc plus facilement être affaibli à cet endroit. Un manchon 13 est engagé dans ce perçage, et la portion horizontale 11, engagée dans le manchon 13, est soutenue par lui sans risquer d'être détériorée. Le manchon 13 comprend deux gorges 14 affleurant aux faces latérales opposées 15 du longeron 4 et qui sont emplies d'un joint de mastic gonflant 16 en forme de bague qui a la faculté de sortir des gorges 14 quand il est l'objet d'une mise à étuve après cataphorèse et de former un joint étanche avec la surface du longeron 4. Non seulement un maintien ferme est obtenu, mais l'arrêt de la corrosion entre le longeron 4 et le manchon 13. De manière avantageuse, telle que représentée à la figure 2, le manchon 13 présente un bord relevé 18 qui se retrouve en appui contre une face 15 du longeron. Le mastic 16 est positionné le long de ce bord relevé 18, apte à être au contact du longeron 4.

Un clip 17, déformable élastiquement, présente sur le pourtour du manchon 13 une forme apte à permettre l'emmanchement dans le longeron 4, puis apte à assurer un pré-maintien du manchon 13 par rapport au longeron 4, avant que l'ensemble ne passe en étuve et que le joint 16 ne gonfle, assurant ainsi le maintien définitif.

## Revendications

1. Agencement de réservoir de carburant d'un véhicule automobile, comprenant deux longerons (4) d'un châssis du véhicule, un réservoir (1) placé entre les deux logerons (4), un tuyau d'alimentation (5) du réservoir et un tuyau de dégazage (7) du réservoir, ledit tuyau de dégazage (7) passant à travers un des longerons (4) et comprenant successivement une portion (10) venant du réservoir, une portion horizontale (11) traversant le longeron, et une portion oblique (12) aboutissant à l'air libre, **caractérise en ce que** le tuyau de dégazage est entouré par un manchon (13) et **en ce que** le manchon (13) est un manchon de guidage soutenant la portion horizontale (11) ; le tuyau d'alimentation (5) passant au-dessous dudit longeron (4).

2. Agencement selon la revendication 1, **caractérisé en ce que** le manchon de guidage est équipé de deux bagues (16) de mastic gonflant à des portions affleurant à des faces latérales (15) opposées du longeron (4).

3. Agencement selon la revendication 2, **caractérisé en ce que** le manchon (13) comporte un bord relevé (18) et **en ce que** l'une des bagues (16) de mastic est formée sur ce bord relevé (18).

4. Agencement selon l'une des revendications précédentes, **caractérisé en ce que** le manchon (13) comporte un clip (17) qui permet l'emmanchement 5 dans le longeron (4) par déformation élastique.

## Claims

1. Arrangement of a fuel tank of a motor vehicle, comprising two longerons (4) of a chassis of the vehicle, a tank (1) placed between the two longerons (4), a tank feed tube (5) and a tank degassing tube (7), said degassing tube (7) passing across one of the longerons (4), and comprising in succession a portion (10) coming from the tank, a horizontal portion (11) crossing the longeron, and an oblique portion (12) ending in the open air, **characterized in that** the degassing tube is surrounded by a sleeve (13) and **in that** the sleeve (13) is a guide sleeve supporting the horizontal portion (11); the feed tube (5) passing below said longeron (4).

2. Arrangement according to Claim 1, **characterized in that** the guidance sleeve is equipped with two mastic rings (16) inflating at portions flush with opposite lateral faces (15) of the longeron (4).

3. Arrangement according to Claim 2, **characterized in that** the sleeve (13) comprises a raised edge (18) and **in that** one of the mastic rings (16) is formed on this raised edge (18).

4. Arrangement according to one of the preceding claims, **characterized in that** the sleeve (13) comprises a clip (17) which allows fastening within the longeron (4) by elastic deformation.

## Patentansprüche

1. Kraftstofftankanordnung eines Kraftfahrzeugs, umfassend zwei Längsträger (4) eines Fahrzeugchassis, einen zwischen den beiden Längsträgern (4) angeordneten Tank (1), ein Zufuhrrohr (5) des Tanks und ein Entgasungsrohr (7) des Tanks, wobei das Entgasungsrohr (7) durch einen der Längsträger (4) passiert und aufeinander folgend einen von dem Tank kommenden Teil (10), einen den Längsträger durchquerenden horizontalen Teil (11) und einen ins Freie führenden schrägen Teil (12) aufweist, **dadurch gekennzeichnet, dass** das Entgasungsrohr von einer Buchse (13) umgeben ist und dass die Buchse (13) eine Führungsbuchse ist, die den horizontalen Teil (11) stützt; wobei das Zufuhrrohr (5) unter dem Längsträger (4) verläuft.

2. Anordnung nach Anspruch 1, **dadurch gekennzeichnet, dass** die Führungsbuchse mit zwei Ringen (16) aus Quellmasse an mit Seitenflächen (15) bündigen Teilen, die dem Längsträger (4) gegenüberliegen, versehen ist.

3. Anordnung nach Anspruch 2, **dadurch gekennzeichnet, dass** die Buchse (13) einen hohen Rand (18) aufweist und dass die Mastixringe (16) an diesem hohen Rand (18) ausgebildet sind.

4. Anordnung nach einem der vorhergehenden Ansprüche, **dadurch gekennzeichnet, dass** die Buchse (13) eine Klammer (17) aufweist, die das Einpressen (5) in den Längsträger (4) durch elastische Verformung gestattet.
